(19) Europäisches Patentamt

European Patent Office

Office européen des brevets

(11) Veröffentlichungsnummer: **0 235 629**
B1

(12) **EUROPÄISCHE PATENTSCHRIFT**

(45) Veröffentlichungstag der Patentschrift:
24.10.90

(21) Anmeldenummer: 87101916.2

(22) Anmeldetag: 11.02.87

(51) Int. Cl.⁵: **F16L 3/12**, F16L 3/22

(54) Einstellbare Befestigungseinrichtung für Rohre.

(30) Priorität: 19.02.86  DE 8604459 U

(43) Veröffentlichungstag der Anmeldung:
09.09.87 Patentblatt 87/37

(45) Bekanntmachung des Hinweises auf die Patenterteilung:
24.10.90 Patentblatt 90/43

(84) Benannte Vertragsstaaten:
AT BE CH DE FR GB LI NL

(56) Entgegenhaltungen:
DE-A- 2 253 141
DE-A- 3 415 294
US-A- 3 167 286

(73) Patentinhaber: Bosse, Heinz, Taunusblick 16,
D-6257 Hünfelden 4 - Neesbach(DE)

(72) Erfinder: Bosse, Heinz, Taunusblick 16,
D-6257 Hünfelden 4 - Neesbach(DE)

(74) Vertreter: Zwirner, Gottfried, Dipl.-Ing. Dipl.-W.-Ing. et
al, Blumbach.Weser.Bergen.Kramer.Zwirner.Hoffmann
Patentanwälte Sonnenberger Strasse 100,
D-6200 Wiesbaden(DE)

**Beschreibung**

Die Erfindung bezieht sich auf ein einstellbares Befestigungssystem für Rohre an einer Wand, einer Decke oder am Boden.

Derartige am Markt befindliche Befestigungssysteme enthalten zweiteilige Rohrschellen, die jeweils halbschalenförmig ausgebildet sind und um ihre laschenartige Verbindungsenden geschwenkt werden können, so lange die Schraubverbindung nicht angezogen ist. Die Halbschalen stoßen entlang von Verzahnungen aneinander, welche die beiden Hälften in fertig montiertem Zustand der Rohrschelle zusammenhalten. Nachteilig an dieser Konstruktion ist der relativ hohe Materialaufwand für die Schelle, da sich dünnes Blech bei der Verzahnungsfuge aufbiegen würde. Es ist aber auch die Montage der Rohre nicht einfach, da sich die Rohrschelle bei eingelegtem Rohr nur schlecht schließen läßt und der Halt der Rohrschelle äußerst schlecht ist, so lange nicht die Schraubverbindung angezogen ist.

Bei einer weiteren bekannten zweiteiligen Rohrschelle (DE-A 3 436 710) soll die Montage durch eine Einhakverbindung zwischen den beiden Rohrschellenteilen verbessert werden. An dem einen Rohrschellenteil ist eine Mutter angeschweißt, die zur Befestigung an der Wand oder Decke dient. Soll der Abstand zu dieser Wand oder Decke eingestellt werden, muß die Rohrschelle gelöst, das montierte Rohr herausgehoben und das Rohrschellenteil mit der angeschweißten Mutter gedreht (verschraubt) werden. Eine derartige Einstellung ist sehr mühsam.

Bei einer weiteren bekannten Rohrschelle (EP-A 188 649) ist ebenfalls eine Mutter angeschweißt, um zur Befestigung an einer Wand oder Decke zu dienen, wobei die erörterten Nachteile entstehen, wenn das montierte Rohr neu ausgerichtet werden muß. Die bekannte Rohrschelle weist eine Platte auf, die sich infolge der Federkraft einer schalldämmenden Einlage parallel zu dem benachbarten Verbindungsende der Schelle auszurichten bestrebt ist und ansonsten die Merkmale b, b.1, b.2, c, c.2, c.3 beinhaltet, wobei sich die Spannschraube seitlich in das schlitzförmige zweite Langloch einschwenken läßt. Dies bedeutet, daß das Schellenband nicht in die Öffnungsstellung federnd vorgespannt ist, in welcher das zu montierende Rohr eingelegt werden kann.

Bei einem weiteren Befestigungssystem für Rohre (DE-A 3 415 294) wird eine einteilige Rohrschelle benutzt, die an ihren Verbindungsenden mit Langlöchern versehen ist, von denen ein Langloch eine Durchtrittsöffnung für den Kopf eines Schraubbolzens aufweist, mit dem das erste Verbindungsende an einem Tragteil angeschraubt wird. Durch Anheben des in die Rohrschelle eingelegten Rohres und Verschieben des zweiten Verbindungsendes gegenüber dem ersten Verbindungsende kann die Durchtrittsöffnung zum Schraubkopf angehoben und hindurchgesteckt werden, wonach die Verbindung durch Verschieben des Rohres und der Rohrschelle in entgegengesetzter Richtung gesichert wird. Bei diesem System werden die Merkmale a, a.1, b, b.1, c, c.1 (fraglich), c.2, c.3, d, d.1, d.2, d.4, e, e.1 (fraglich), e.2 zweite Alternative, f, f.1, f.2 des Anspruchs 1 benutzt. Nachteilig ist der Umstand, daß das Rohr angehoben werden muß, um die Montagezwischenstellung herbeizuführen, sowie auch, daß bei der Einstellung der Teile nicht die volle Länge der Langlöcher ausgenutzt werden kann.

Der Erfindung liegt die Aufgabe zugrunde, ein preisgünstiges Befestigungssystem für Rohre an einer Wand, einer Decke oder am Boden zu schaffen, bei dem die Rohrschelle in eine Einraststellung gebracht werden kann, in welcher das Rohr vormontiert ist, und daß die Rohrschelle im Bereich ihrer Verbindung mit dem Halter in unterschiedlichen Lagen festgeklemmt werden kann.

Die gestellte Aufgabe wird aufgrund der Maßnahmen des Hauptanspruchs gelöst. Die Unteransprüche beziehen sich auf Ausgestaltungen und Weiterbildungen der Erfindung.

Insbesondere ergeben sich bei der erfindungsgemäßen Rohrschelle folgende Vorteile gegenüber herkömmlichen Rohrschellen:

1. Durch die Konzeption als einteilige Rohrschelle sowie Verzicht auf angebrachte Muttern, Verstärkungsbügel und ähnliches ist die Fertigung außerordentlich preisgünstig.

2. Die Rohrschelle wird in offenem, zur Aufnahme des Rohrs ohne weitere Maßnahmen sofort bereitem Zustand geliefert.

3. Nach Einlegen des Rohres in die Schelle genügt ein einfacher Druck, um die Schelle zu schließen. Die Rohre können in diesem Zustand verbleiben, bis der ganze Rohrstrang verlegt ist..

4. Das Ausrichten des Rohrstrangs kann durch einfaches Verschieben der im Halter noch losen Schelle innerhalb des Langlochs erfolgen. Erst jetzt braucht die Schraube in dieser Lage festgezogen zu werden.

Durch diese Möglichkeiten wird nicht nur die Montagezeit eines Rohrstrangs außerordentlich verkürzt, zusätzlich ergeben sich auch erhebliche Vorteile dadurch, daß keinerlei Teile zur Montage gelöst werden müssen und hierdurch nicht verloren gehen können.

Ausführungsbeispiele der Erfindung sind anhand der Zeichnung beschrieben. Dabei zeigt:

Fig. 1 eine erste Ausführungsform perspektivisch und teilweise in auseinandergezogener Darstellung,

Fig. 2 eine zweite Ausführungsform in perspektivischer Darstellung und

Fig. 3 eine dritte Ausführungsform, ebenfalls perspektivisch.

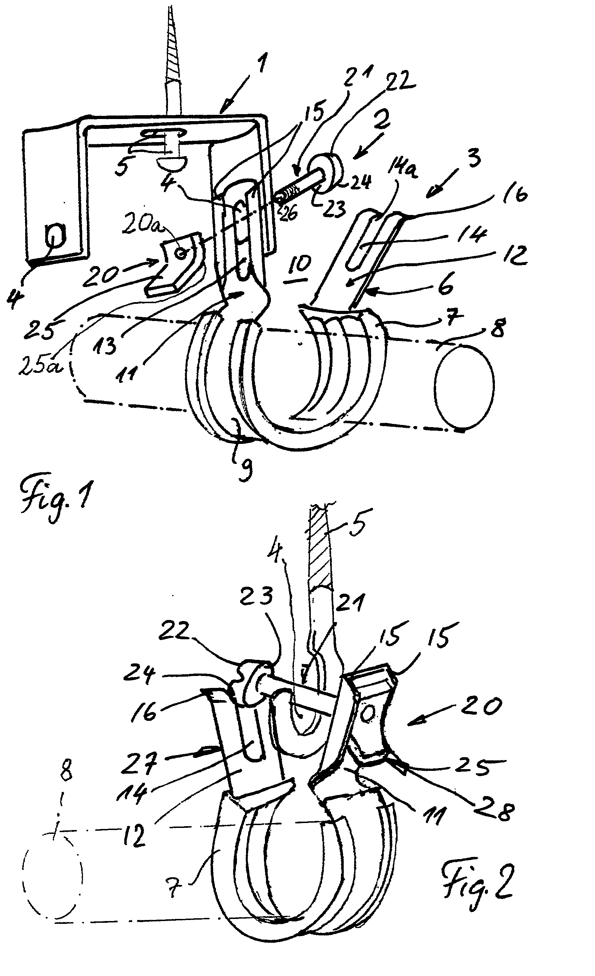

Das Befestigungssystem für Rohre enthält als hauptsächlichste Bestandteile einen Halter 1, eine Schraubverbindung 2 und eine Rohrschelle 3. Der Halter 1 kann als Winkel, U-Eisen (Fig. 1) oder als Haken- bzw. Ösenschraube (Fig. 2) ausgebildet sein und enthält Öffnungen 4 zum Durchstecken der Schraube 2 sowie Befestigungseinrichtungen 5 zur Befestigung der Halterung an einer Wand oder Decke.

Die Rohrschelle 3 besteht aus einem Schellenband 6 und einer Schalldämpfungsschicht 7, die sich um das zu montierende Rohr 8 legen soll. Das Schellenband 6 ist, wie dargestellt, einteilig und aus relativ dünnem, biegsamem Blech gefertigt, welches eine Rundung 9 sowie ein erstes laschenartiges Verbindungsende 11 und ein zweites laschenartiges Verbindungsende 12 aufweist, zwischen denen sich ein Öffnungsmaul 10 erstreckt. Das Material des Schellenbandes 6 ist so gewählt, daß die Enden 11, 12 in die dargestellte Lage nach Fig. 1 federnd zurückgehen, wenn zuvor das Maul 10 geschlossen worden ist. Das Schellenband 6 wird also beim Gebrauch nur im elastischen Bereich beansprucht.

In den Verbindungsenden 11, 12 sind Langlöcher 13, 14 vorgesehen, wobei das Langloch 14 durch einen Ausweitungsbereich 14a zu einem Schlitz geworden ist. Die zum Langloch 13 parallelen Ränder des Verbindungsendes 11 sind im Sinne von Lappen 15 abgebogen, die zwischen sich eine Führung und einen Anschlag für die Mutter 20 der Schraubverbindung 2 bilden. Die oberen Ränder am Schlitzausgang 14a des Verbindungsendes 12 bilden Abwinkelungen 16 nach außen und damit Nocken zur Maulseite bzw. Haken zur Außenseite.

Die Schraubverbindung 2 enthält die bereits erwähnte Mutter 20 und einen Schraubbolzen 21 mit Kopf 22. Der Kopf 22 besitzt eine ebene Kopfrückseite 23 und eine gewölbte bzw. sich am Rand verjüngende Kopfoberseite 24, die mit den Abwinklungen 16 im Sinne einer Nockenfläche zusammenarbeiten kann. Die Mutter 20 besteht aus einer winklig gebogenen Platte und weist somit einen abstehenden Winkelarm 25 auf, der über eine Abrundung 25a in die Ebene der Mutterplatte übergeht, und zwar vorzugsweise im Bereich des Randes der Gewindebohrung 20a.

Es sei angenommen, daß der Halter 1 (Fig. 1 oder 2) an einer Deckenwand befestigt ist und die Mutter 20 auf den Gewindeanfang 26 des Schraubbolzens 21 geschraubt sei. Der Schraubbolzen 21 reicht dann mit seinem Schaft durch die Öffnungen 4 und 13 hindurch, und die Mutter 20 liegt geführt zwischen den Lappen 15 des Schellenbandes 6. Nunmehr kann das Rohr 8 vormontiert werden. Wenn man mit dem Daumen auf den abstehenden Winkelarm 25 drückt, stellt sich der Schraubbolzen 21 schräg nach oben, und wenn man das zweite laschenartige Verbindungsende 12 mit den Fingern der gleichen Hand herbeiholt, so daß das Maul 10 enger wird, stößt die Abwinklung 16 an der Nockenfläche 24 an oder wird knapp vorbeigeführt, und nach Loslassen des Druckes mit der Hand verhaken sich die Abwicklungen 16 auf der Kopfrückseite 23. Infolge der Federvorspannung sucht das Schellenband 6, den Kopf 22 von dem Halter 1 wegzuziehen, d. h. die Mutter 20 wird in den Führungsbereich zwischen die Lappen 15 gezogen und damit gegen eventuelles Drehen gesichert. Die Befestigungseinrichtung ist durch Verschieben in den Langlöchern 5, 13 (Fig. 1) einstellbar, und zwar im Langloch 5 nach rechts–links und in den Langlöchern 4 und 13, 14 nach oben-unten. Durch Anziehen der Schrauben 5, 21 wird die gewünschte Stellung gesichert.

Fig. 2 zeigt eine Rohrschelle 3 unmittelbar vor dem Einrasten der Abwinklung 16 hinter den Kopf 22 des Schraubbolzens 21 sowie vor dem Einhängen in die Öffnung 4 des als Schraubhaken ausgebildeten Halters 1. Es könnte auch eine Ösenschraube als Halter 1 verwendet werden, wobei man dann den Schraubbolzen 21 durch die Ösenöffnung zu stecken hätte. Die Montagehöhe des zu montierenden Rohres 8 kann durch mehr oder weniger starkes Einschrauben des Hakens 1 mitbestimmt werden (zusätzlicher Manövrierraum infolge der Langlöcher 13, 14). Der Druck der Finger und des Daumens beim Einrasten ist durch Pfeile 27, 28 angedeutet. Infolge der Nockenfläche 24 gleitet der Kopf 22 an den Abwinklungen 16 entlang und rastet dann mit seiner Kopfrückseite 23 ein. Das Rohr 8 kann nunmehr ausgerichtet und festgemacht werden.

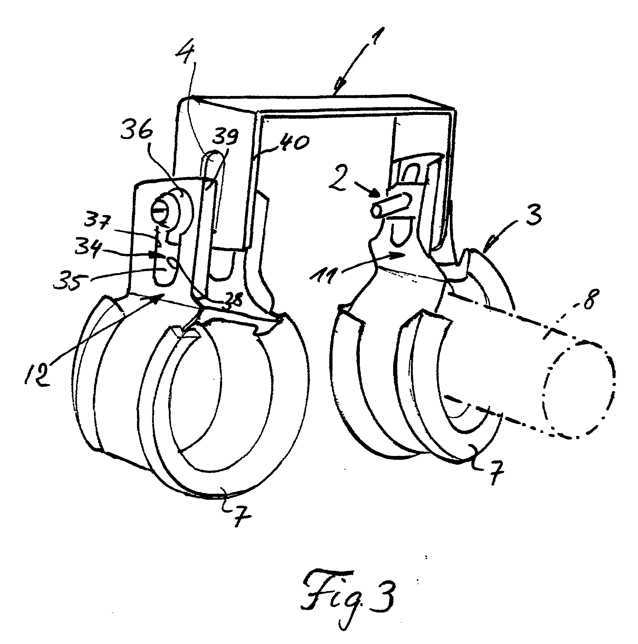

Fig. 3 zeigt eine dritte Ausführungsform des einstellbaren Befestigungssystems gemäß Erfindung. Sich entsprechende Teile gegenüber der ersten Ausführungsform sind mit den gleichen Bezugszeichen belegt und brauchen nicht gesondert beschrieben zu werden. Der hauptsächlichste Unterschied besteht in der Ausbildung der Öffnung des zweiten laschenartigen Verbindungsendes 12, diese Öffnung 34 ist nämlich schlüssellochartig gestaltet und weist einen Langlochbereich 35 und einen Ausweitungsbereich 36 auf. Der Langlochbereich 35 weist zwei Seitenränder 37 und 38 auf, wobei der Ausweitungsbereich 36 sich tangential an den Rand 37 anschließt und den Rand 38 gewissermaßen ausbaucht. Der Ausweitungsbereich 36 ist also etwas unsymmetrisch zur Längsachse des Langlochbereichs 35 angeordnet. Das laschenartige Verbindungsende 12 weist einen abgekanteten Lappen 39 auf, der parallel und benachbart zum Langlochrand 38 angeordnet ist. In fertig montiertem Zustand greift der Lappen 39 über die Schmalseite 40 des Halters 1 und bildet eine Führung und Drehsicherung. Der gleiche Erfolg kann dadurch erzielt werden, daß eine vorstehende Rippe an dem Halter 1 vorgesehen ist, die den Lappen 39 ersetzt.

Bei der Montage wird ähnlich vorgegangen, wie mit Bezug auf die Ausführungsform nach Fig. 1 beschrieben. Das zweite laschenartige Verbindungsende 12 ist zunächst geöffnet, so daß das Rohr durch das Öffnungsmaul 10 hindurch eingeführt werden kann. Wenn anschließend das laschenartige Verbindungsende 12 in Richtung auf den Halter 1 gedrängt wird, kommt die Nockenfläche 24 in Anlage an den Rand des Ausweitungsbereichs 36, und der Schraubenkopf 22 wird durch diese Öffnung 36 hindurchgeführt und rastet anschließend mit seiner Rückseite auf der Oberseite des zweiten Verbindungsendes 12 ein. Danach werden die beabsichtigten Einstellungen für das Rohr 8 vorgenommen und die Einstellung durch Anziehen der Schrauben gesichert. Diese gesicherte Stellung ist auf der rechten Bildhälfte dargestellt.

Statt des einteiligen Schellenbandes könnte auch ein zweiteiliges verwendet werden, bei dem die Elastizität durch den eingesetzten Gummistreifen 7 geliefert wird. Da jedoch ein einteiliges Schellenband wesentlich billiger herzustellen ist als ein zwei- oder mehrteiliges Schellenband, wird das einteilige Schellenband weitaus bevorzugt.

Mit der Erfindung ist der besondere Vorteil verknüpft, daß die Montagearbeiten mit vorbereiteter Schraubverbindung 2 auskommen, d. h. es ist nicht notwendig, eine Mutter auf das Ende einer Schraube aufzudrehen, was insbesondere beim Überkopfarbeiten (Befestigung von Rohren an einer Decke) lästig wäre.

**Patentansprüche**

1. Einstellbares Befestigungssystem für Rohre an einer Wand, Decke oder am Boden mit folgenden Merkmalen:
a. ein Halter (1) ist
a.1 zur Befestigung an der Wand, Decke oder am Boden ausgebildet (5) und weist wenigstens
a.2 eine Durchstecköffnung (4) auf, die eine Schwenkbewegung eines hindurchgreifenden Schraubbolzens (21) ermöglicht, der einer Schraubverbindung (2) zur Befestigung einer Rohrschelle (3) angehört;
b. die Schraubverbindung (2) besteht aus
b.1 dem Schraubbolzen (21) mit Kopf (22) und
b.2 einer Mutter (20),
c. die Rohrschelle (3) enthält
c.1 ein zwischen Schließstellung und Öffnungsstellung federndes, in die Öffnungsstellung federnd vorgespanntes Schellenband (6)
c.2 mit einem ersten laschenartigen Verbindungsende (11) und einem darin angebrachten ersten Langloch (13),
c.3 mit einem zweiten laschenartigen Verbindungsende (12) und einem darin angebrachten zweiten Langloch (14, 34);
c.4 das zweite Langloch (14, 34) weist einen Ausweitungsbereich (14a, 36) auf, dessen Ränder zum Hintergreifen des Kopfes (22) des Schraubbolzens (21) ausgebildet sind;
d. in der Montageausgangsstellung
d.l hängt das Schellenband (6) locker mit seinem ersten laschenartigen Verbindungsende (11) an dem Schraubbolzen (21) und
d.2 dieser Schraubbolzen (21) an dem Halter (1), wobei
d.3 die Mutter (20) lediglich auf den Gewindeanfang (26) des Schraubbolzens (21) geschraubt, jedoch noch nicht festgezogen ist
d.4 ferner wird das zu montierende Rohr (8) in die offene Rohrschelle (3) eingelegt und
d.5 der Kopf (22) des Schraubbolzens (21) durch Schließen der Rohrschelle (3) zum Einrasten am Ausweitungsbereich (14a, 36) gebracht, um eine Montagezwischenstellung einzunehmen;
e. in der Montagezwischenstellung
e.1 stützt sich das zweite laschenartige Verbindungsende (12) federnd an der Rückseite (23) des Schraubbolzenkopfs (22) ab und
e.2 ermöglicht eine Einstellung der Teile (2, 3, 8) längs der Durchstecköffnung (4) im Halter (1) und/oder längs der beiden Langlöcher (13, 14, 34),
f. in der Montageendstellung,
f.1 bei festgezogener Schraubverbindung (2),
f.2 sind die laschenartigen Verbindungsenden (11, 12) am Halter (1) festgepreßt.

2. Befestigungssystem nach Anspruch 1, dadurch gekennzeichnet, daß das Schellenband (6) einteilig ist.

3. Befestigungssystem nach Anspruch 1 oder 2, dadurch gekennzeichnet, daß der Ausweitungsbereich (14a) das zweite Langloch (14) zu einem oben offenen Schlitz macht und daß der obere Rand des laschenartigen Verbindungsendes (12) nach außen gebogene Abwinkelungen (16) bildet.

4. Befestigungssystem nach einem der Ansprüche 1 bis 3, dadurch gekennzeichnet, daß die Mutter (20) der Schraubverbindung (2) einen abstehenden Winkelarm (25) aufweist.

5. Befestigungssystem nach Anspruch 1 oder 2, dadurch gekennzeichnet, daß der Ausweitungsbereich (36) dem zweiten Langloch (34) ein schlüssellochartiges Aussehen verleiht.

6. Befestigungssystem nach Anspruch 5, dadurch gekennzeichnet, daß der Ausweitungsbereich (36) unsymmetrisch am oberen Ende des zweiten Langlochs (34) angeordnet ist und daß der Halter (1) und das zweite Verbindungsende (12) beim Aufeinanderlegen im Sinne einer Führung (39, 40) ineinander greifen, wobei der nicht durch den Ausweitungsbereich betroffene Rand (37) des zweiten Langlochs (34) in jeder Verschiebestellung des Schellenbandes (6) zum Halter (1) hinter den Kopf (22) des Schraubbolzens (21) greift.

7. Befestigungssystem nach einem der Ansprüche 1 bis 6, dadurch gekennzeichnet, daß das erste laschenartige Verbindungsende (11) des Schellenbandes (6) abgebogene Lappen (15) als Drehsicherung der Mutter (20) aufweist.

8. Befestigungssystem nach einem der Ansprüche 1 bis 7, dadurch gekennzeichnet, daß der Kopf (22) des Schraubbolzens (21) drehsymmetrisch ist und nach vorne sich verjüngende Nockenflächen (24) aufweist.

**Claims**

1. Adjustable system for fastening pipes to a wall, ceiling or floor, having the following features:
a. a holder (1) is
a.1 designed (5) for fastening to the wall, ceiling or floor and has at least
a.2 one through-opening (4) which allows a screw bolt (21) engaging through it to swivel, said screw bolt being part of a screw connection (2) for fastening a pipe clamp (3);
b. the screw connection (2) comprises
b.1 the screw bolt (21) having a head (22) and
b.2 a nut (20),
c. the pipe clamp (3) includes
c.1 a clamp band (6) which springs between a closing and an opening position, being resiliently prestressed into the opening position,
c.2 having a first bracket-like connection end (11) in which there is mounted a first elongated hole (13),
c.3 having a second bracket-like connection end (12) in which there is mounted a second elongated hole (14, 34);

c.4 the second elongated hole (14, 34) has an enlarged region (14a, 36) whose edges are designed to engage behind the head (22) of the screw bolt (21);
d. in the initial assembly position
d.1 the clamp band (6) is loosely suspended by its first bracket-like connection end (11) on the screw bolt (21) and
d.2 this screw bolt (21) is suspended on the holder (1),
d.3 with the nut (20) merely being screwed, but not yet tightened, onto the start (26) of the thread of the screw bolt (21),
d.4 moreover, the pipe (8) for installation is inserted into the open pipe clamp (3) and
d.5 the head (22) of the screw bolt (21) is caused by closure of the pipe clamp (3) to latch at the enlarged region (14a, 36) in order to assume an intermediate assembly position;
e. in the intermediate assembly position
e.1 the second bracket-like connection end (12) is resiliently supported on the rear side (23) of the screw bolt head (22) and
e.2 allows the parts (2, 3, 8) to be adjusted along the throughopening (4) in the holder (1) and/or along the two elongated holes (13, 14, 34),
f. in the final assembly position,
f.1 when the screw connection (2) has been tightened,
f.2 the bracket-like connection ends (11, 12) are pressed firmly against the holder (1).

2. Fastening system according to claim 1, characterised in that the clamp band (6) is a single piece.

3. Fastening system according to claim 1 or 2, characterised in that the enlarged region (14a) turns the second elongated hole (14) into a slot which is open at its top end and in that the upper edge of the bracket-like connection end (12) forms outwardly bent angled portions (16).

4. Fastening system according to one of claims 1 to 3, characterised in that the nut (20) of the screw connection (2) has a protruding angle arm (25).

5. Fastening system according to claim 1 or 2, characterised in that the enlarged region (36) lends the second elongated hole (34) a keyholelike appearance.

6. Fastening system according to claim 5, characterised in that the enlarged region (36) is disposed asymmetrically at the upper end of the second elongated hole (34), and in that the holder (1) and the second connection end (12), when placed one on top of the other, engage one within the other in the manner of a guideway (39, 40), with the edge (37) of the second elongated hole (34) not affected by the enlarged region engaging behind the head (22) of the screw bolt (21) in each displacement position of the clamp band (6) relative to the holder (1).

7. Fastening system according to one of claims 1 to 6, characterised in that the first bracket-like connection end (11) of the clamp band (6) has bent lugs (15) to prevent the nut (20) from rotating.

8. Fastening system according to one of claims 1 to 7, characterised in that the head (22) of the screw bolt (21) is rotationally symmetrical and towards the front has tapering cam surfaces (24).

## Revendications

1. Système réglable de fixation de tubes sur un mur, à un plafond ou sur le sol comportant les caractéristiques suivantes:
a. un support (1) est
a.1 conformé (5) en vue d'être fixé sur un mur, à un plafond ou sur le sol, et il présente au moins
a.2 une ouverture (4) servant à l'enfilage qui permet un mouvement de pivotement d'un boulon fileté (21) qui la traverse, et qui appartient à une liaison (2) par vis destinée à la fixation d'un collier (3) pour tube;
b. la liaison (2) par vis est constituée par
b.1 le boulon fileté (21) comportant une tête (22) et
b.2 un écrou (20),
c. le collier (3) pour tube comprend
c.1 une bande (6) de collier produisant un effet de ressort entre la position de fermeture et la position d'ouverture, et en situation de précontrainte avec effet de ressort en position d'ouverture,
c.2 comportant une première extrémité (11) de liaison en forme de patte et un premier trou oblong (13) ménagé dans celle-ci,
c.3 comportant une seconde extrémité (12) de liaison en forme de patte et un second trou oblong (14, 34) ménagé dans celle-ci;
c.4 le second trou oblong (14, 34) présente une zone de prolongement (14a, 36) dont les bords sont conformés de manière à passer derrière la tête (22) du boulon fileté (21);
d. en position de départ du montage
d.1 la bande (6) de collier pend de façon lâche par sa première extrémité (11) de liaison en forme de patte, sur le boulon fileté (21) et
d.2 ce boulon fileté (21) étant situé sur le support (1),
d.3 l'écrou (20) étant vissé seulement sur le début (26) du filetage du boulon fileté (21) mais n'étant cependant pas vissé à fond,
d.4 puis le tube (8) qu'il s'agit de monter est mis en place dans le collier (3) pour tube ouvert et
d.5 la tête (22) du boulon fileté (21) est amenée à s'encliqueter dans la zone de prolongement (14a, 36) en fermant le collier (3) pour tube, pour se trouver placée dans une position intermédiaire de montage;
e. dans la position intermédiaire de montage
e.1 la deuxième extrémité (12) de liaison en forme de patte s'appuie en produisant un effet de ressort sur le côté arrière (23) de la tête (22) de boulon fileté et
e.2 elle permet le réglage des pièces (2, 3, 8) le long de l'ouverture (4) d'enfilage du support (1) et/ou le long des deux trous oblongs (13, 14, 34),
f. dans la position finale de montage,
f.1 la liaison (2) par vis étant vissée à fond,
f.2 les extrémités (11, 12) de liaison en forme de pattes sont pressées solidement contre le support (1).

2. Système de fixation selon la revendication 1, caractérisé par le fait que la bande (6) de collier est en une seule pièce.

3. Système de fixation selon la revendication 1 ou 2, caractérisé par le fait que la zone de prolongement (14a) transforme le deuxième trou oblong (14) en une fente ouverte vers le haut et que le bord de l'extrémité (12) de liaison en forme de patte constitue des parties coudées (16) courbées vers l'extérieur.

4. Système de fixation selon une des revendications 1 à 3, caractérisé par le fait que l'écrou (20) de la liaison (2) par vis présente une branche (25) coudée qui s'écarte vers l'extérieur.

5. Système de fixation selon la revendication 1 ou 2, caractérisé par le fait que la zone de prolongement (36) du deuxième trou oblong (34) à un aspect du genre d'un trou de serrure.

6. Système de fixation selon la revendication 5, caractérisé par le fait que la zone d'élargissement (36) est disposée de facon non symétrique à l'extrémité supérieure du deuxième trou oblong (34) et que le support (1) et la deuxième extrémité (12) de liaison pénètrent l'un dans l'autre à la manière d'un guidage (39, 40), le bord (37) non concerné par la zone d'élargissement du deuxième trou oblong (34) pénètre dans toutes les positions de déplacement de la bande (6) de collier jusqu'au support (1) derrière la tête (22) du boulon fileté (21).

7. Système de fixation selon une des revendications 1 à 6, caractérisé par le fait que la première extrémité de liaison (11) en forme de patte de la bande (6) de collier présente des parties rabattues (15) servant de sécurité à l'encontre de la rotation.

8. Système de fixation selon l'une des revendications 1 à 7, caractérisé par le fait que la tête (22) du boulon fileté (21) est symétrique par rapport à un axe de révolution et présente vers l'avant des surfaces (24) servant de came, qui vont en se rétrécissant.

EP 0 235 629 B1

Fig. 1

Fig. 2

Fig. 3